# EUROPÄISCHE PATENTANMELDUNG

(11) **EP 1 533 552 A1**
(43) Veröffentlichungstag der Anmeldung: **25.05.2005**
(21) Anmeldenummer: 04022896.7
(22) Anmeldetag: 25.09.2004
(51) Int. Cl.: F16K 31/06, F16K 31/08

(54) **Elektromagnetisches Ventil**

(30) Priorität: 20.11.2003 DE 10354231
(71) Anmelder: ROBERT BOSCH GMBH, 70442 Stuttgart (DE)
(72) Erfinder: Bauer, Bertram, 76571 Gaggenau (DE)

(57) **Zusammenfassung**

Die Erfindung geht von einem Ventil (10) mit mindestens zwei Anschlussleitungen (12; 14, 16) und mindestens einem Schließkörper (24, 26) aus, der den Durchfluss von der ersten Anschlussleitung (12) zu der weiteren Anschlussleitung (14, 16) oder umgekehrt steuert und der von einem Drehanker (44) mit einem permanenten Nordpol (52) und einem permanenten Südpol (54), die mit einem gehäusefesten, ansteuerbaren Elektromagneten (56, 58, 60, 62) zusammenarbeiten, entgegen der Kraft einer Feder (64) betätigt wird. Es wird vorgeschlagen, dass der Schließkörper (24, 26) an einem Ventilkolben (28, 30) vorgesehen ist, der quer zur Drehachse (76) des Drehankers (44) angeordnet, mit diesem triebmäßig verbunden und axial verstellbar ist.

## Beschreibung

### Stand der Technik

Die Erfindung geht von einem Ventil nach dem Oberbegriff des Anspruchs 1 aus.

Aus der Fluidtechnik sind Wegeventile in zahlreichen Variationen bekannt. Sie besitzen in der Regel einen Schließkörper zum Steuern oder Regeln der Durchflussmenge oder des Drucks eines Strömungsmediums. Bei so genannten Kolbenschieberventilen ist der Schließkörper als Kolben ausgebildet, der mindestens einen Verbindungskanal in Form einer Bohrung oder Nut besitzt, über die je nach Stellung des Kolbens die Verbindung mindestens eine Anschlussleitung am Ventilgehäuse mit einer weiteren Anschlussleitung hergestellt oder getrennt wird. Besitzt ein Kolbenschieberventil mehrere Anschlüsse, ist durch verschiedene Stellungen des Kolbens eine Vielzahl von Steuerungsverknüpfungen möglich. Eine weitere Bauart sind Sitzventile, bei denen der Schließkörper mit einem Ventilsitz zusammenarbeitet. Während bei Kolbenschieberventilen mit Leckagen über den Spalt zwischen dem Schließkörper und dem ihn umgebenden Zylindergehäuse zu rechnen ist, schließen Sitzventile mit einer hohen Dichtqualität dicht ab. Ferner besitzen sie ein geringes Bauvolumen und einen kurzen Schalthub.

In zunehmendem Maße werden Ventile durch elektrische Aktuatoren betätigt, die durch elektronische Steuereinheiten leicht in Abhängigkeit zahlreicher Parameter angesteuert werden können. Aus der EP 1 009 091 A2 ist ein Aktuator für ein Drosselventil, insbesondere eine Drosselklappe einer Brennkraftmaschine, bekannt. Er ist außerhalb des Drosselventils angeordnet und weist einen ansteuerbaren, gehäusefesten und ringförmigen Elektromagneten auf, in dessen Innenraum ein Drehanker mit einem permanenten Nordpol und einen permanenten Südpol drehbar gelagert ist. Der Drehanker ist über eine Achse, die einseitig in das Drosselventil hineinragt, mit der Drosselklappe drehfest verbunden, wobei die Drehachse des Drehankers koaxial zur Drehachse der Drosselklappe angeordnet ist. Je nach der Bestromung des Elektromagneten wird der Drehanker und mit ihm die Drosselklappe entgegen der Kraft einer Feder betätigt, sodass er die Durchflussmenge des Mediums steuert. Da die Stellkräfte allein durch das vom Drehanker erzeugte Drehmoment aufgebracht werden, müssen der Elektromagnet und der Drehanker entsprechend groß dimensioniert werden.

### Vorteile der Erfindung

Nach der Erfindung ist ein Schließkörper eines Ventils an einem Ventilkolben vorgesehen, der quer zur Drehachse des Drehankers angeordnet, mit diesem triebmäßig verbunden und axial verstellbar ist. Bei dem erfindungsgemäßen Ventil wird die Drehbewegung des Drehankers durch die triebmäßige Verbindung in Form eines Nockentriebs, eines Zahnradgetriebes, oder eines anderen geeigneten Getriebes in eine Stellbewegung quer zur Rotationsachse des Drehankers und Stellrichtung des Schließkörpers gewandelt, sodass der Aktuator mit einem Drehanker auch für Kolbenschieberventile und Sitzventile eingesetzt werden kann. Gleichzeitig kann durch das Getriebe der Stellweg bzw. die Stellkraft den jeweiligen Einsatzerfordernissen angepasst werden. Da der Spalt zwischen dem Drehanker und dem Elektromagneten während der Stellbewegung konstant bleibt, sind keine Begrenzungsanschläge erforderlich, sodass Schaltgeräusche weitgehend vermieden werden.

In einfacher Weise ist mit dem Drehanker mindestens ein quer zur Drehachse verlaufender Nocken drehfest verbunden. Dieser greift in eine Aussparung des quer zur Drehachse angeordneten Ventilkolbens ein. Bei einer entsprechenden Auslenkung des Drehankers wird der Ventilkolben axial verschoben und verstellt entsprechend einen Schließkörper. Im Fall eines Kolbenschiebers kann der Ventilkolben gleichzeitig als Schließkörper ausgebildet sein und dessen Funktion übernehmen, indem er Steuernuten, Steuerkanäle und/oder Steuerbohrungen aufweist. Bei einem Sitzventil ist stirnseitig am Ventilkolben ein Schließkörper, z.B. einen Ventilteller oder dergleichen, vorgesehen, der mit einem gehäusefesten und in Verlängerung des Ventilkolbens liegenden Ventilsitz zusammenwirkt. Der ventilsitz ist zweckmäßigerweise stirnseitig am Ende einer Anschlussleitung angeordnet, die ein Stück weit in eine Ventilkammer ragt. Je nach dem, ob auf das Ventil als Abschlussventil oder Mehrwegeventil ausgebildet ist, münden ein oder mehrere Anschlussleitungen in die Ventilkammer. Den Anschlussleitungen können ein gemeinsamer Schließkörper in Form eines Kolbenschiebers oder separate Schließkörper mit einem ventilsitz zugeordnet werden.

Im angesteuerten Zustand greift die Magnetkraft des Elektromagneten auf beiden Seiten des Drehankers am äußeren Radius an und erzeugt über einen relativ großen Hebelarm ein Drehmoment. Dieses Drehmoment wirkt dann über den wesentlich kleineren Hebelarm des Nockens als Stellkraft auf den Schließkörper. Diese Hebelverhältnisse ergeben eine vorteilhafte Übersetzung der Magnetkraft zur Stellkraft. Ein weiterer Vorteil ist das geräuschoptimierte Schalten des erfindungsgemäßen Prinzips, da sehr kleine und leichte Schließelemente verwendet werden und der Drehanker keinen mechanischen Anschlag aufweist. Ferner werden Geräusche dadurch vermieden, dass der Schließkörper und/oder der Ventilsitz ein elastisches Element umfasst, das stirnseitig in den Ventilkolben bzw. Ventilsitz eingelassen ist und die Aufsetzbewegung dämpft.

Vorteilhafterweise sind wesentliche Teile des Aktuators im Gehäuse des Ventils angeordnet, sodass im Vergleich zu Ventilen mit bekannten äußeren Stelleinrichtungen ein sehr geringer Bauraum benötigt wird. Der Drehanker ist drehbar im Gehäuse angeordnet, an dessen Innenwänden Rückschlussbleche des Elektromagneten angeordnet sind, die auf einer Kreisbahn liegen und mit dem Drehanker zusammenwirken. Der Nocken zum Antrieb des Ventilkolbens ist in Richtung der Drehachse versetzt auf einer mit dem Drehanker gemeinsamen Welle angeordnet.

Nach einer Ausgestaltung der Erfindung kann das Ventil als Mehrwegeventil mit zwei Ventilkolben und drei Anschlussleitungen angewendet werden. In diesem Fall befinden sich die Ventilkolben zu beiden Seiten der Drehachse und die Nocken sind um 180° versetzt an der Achse angeordnet. Dabei können die Nocken im Wesentlichen spielfrei in die Aussparungen eingreifen, sodass je nach Drehrichtung des Drehankers eine Anschlussleitung geöffnet, während die andere geschlossen wird. In einer Zwischenstellung können beide Anschlussleitungen geöffnet sein. In einer anderen Ausgestaltung werden die Schließkörper durch eine Ventilfeder in die Schließposition gebracht, während die Nocken je nach Drehrichtung einen der Schließkörper in Öffnungsrichtung verstellt. Dabei vollführt der andere Nocken eine Leerbewegung, indem die zugeordnete Aussparung einen entsprechenden Freiraum aufweist. Hierbei wird einer der Ventilkolben axial verschoben und der zugeordnete Ventilsitz geöffnet, während der andere in einer Ruheposition und somit geschlossen bleibt. Der Wechsel der Drehrichtung wird durch Umpolen der Spule des Elektromagneten erreicht. Ist der Elektromagnet stromlos, werden die beiden Ventilkolben von einer Ventilfeder in ihrer Schließstellung gehalten und beide Ventilsitze sind geschlossen. Dieses Ventil wirkt nun als 3/3-Wegeventil und kann zwei Abschlussventile bekannter Bauart ersetzen, wodurch neben Bauraum auch Material- und Fertigungskosten eingespart werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

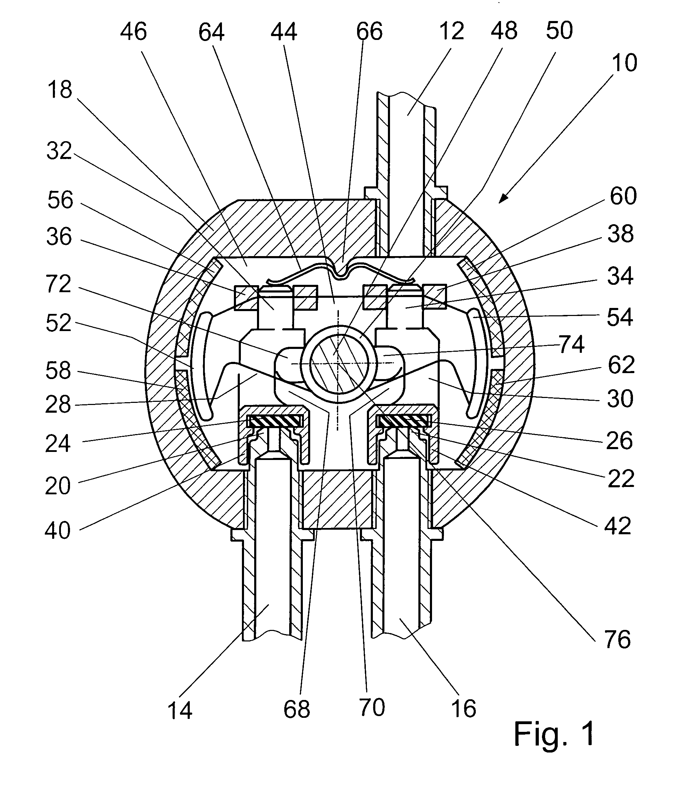

- Fig. 1: einen Schnitt durch ein erfindungsgemäßes 3/3 Wegeventil im geschlossenen Zustand und
- Fig. 2: einen Schnitt durch ein erfindungsgemäßes Ventil nach Fig. 1 nun in einem geöffneten Zustand.

### Beschreibung des Ausführungsbeispiels

Ein Ventil in Form eines 3/3-Wegeventils 10 besitzt ein Ventilgehäuse 18 mit einer Ventilkammer 46. Am Ventilgehäuse 18 sind drei Anschlussleitungen 12, 14 und 16 befestigt, beispielsweise verschraubt und münden in die Ventilkammer 46. Die Anschlussleitungen 12, 14 und 16 liegen vorzugsweise in einer Ebene, können aber auch in Richtung einer Drehachse 76 axial versetzt zueinander angeordnet sein. Jeweils zwei Anschlussleitungen 14, 16 können als Zulauf oder Ablauf dienen, während die andere Anschlussleitung 12 entsprechend als Ablauf bzw. Zulauf dient. Daraus ergeben sich für zwei Schaltstellungen zwei Wege, während in einer dritten Schaltstellung das Ventil 10 den Durchfluss sperrt.

Das Dreiwegeventil 10 wird elektromagnetisch durch einen Drehanker 44 betätigt, der einen Permanentmagneten mit einem Nordpol 52 und einem Südpol 54 aufweist, der mit zwei Elektromagneten zusammenarbeitet. Von den Elektromagneten sind nur Rückschlussbleche 56, 58, 60, 62 dargestellt, die auf einer Kreisbahn relativ zur Drehachse 76 des Drehankers 44 angeordnet sind und zu dem Nordpol 52 sowie dem Südpol 54 einen geringen Belegungsspalt bilden. Um Bauraum zu sparen, sind der Elektromagnet mit den Rückschlussblechen 56, 58, 60 und 62 sowie der Drehanker 44 im Ventilgehäuse 18 angeordnet, und zwar in der Ventilkammer 46 oder in einem von dieser getrennten Teil des Ventilgehäuses 18. Dabei sind die Rückschlussbleche 56, 58, 60 und 62 jeweils paarweise und diametral zueinander an den Innenwänden des Ventilgehäuses 18 angebracht, während der Drehanker 44 zwischen ihnen und drehbar im Zentrum der Ventilkammer 46 auf einer Achse 48 sitzt, die in einer Nabe 50 drehbar gelagert ist.

Auf der Achse 48 sitzen in Richtung der Drehachse 76 axial zum Drehanker 44 versetzt zwei Nocken 72, 74, die relativ zur Drehachse 76 diametral zueinander angeordnet sind und jeweils in eine Aussparung 68 bzw. 70 eines zugeordneten Ventilkolbens 28 bzw. 30 eingreifen. Die Größe und Lage der Aussparungen 68, 70 sind auf die Größe und Lage der Nocken 72, 74 so abgestimmt, dass die Nocken 72, 74 in einer Ausgangsposition mit zwei radialen Flächen, die in Drehrichtung gesehen einander zugewandt sind, an Seitenflächen der Aussparungen 68, 70 anliegen, die quer zur Verstellrichtung der Ventilkolben 28, 30 liegen, sodass der eine Ventilkolben 28 bei einer Drehbewegung im Uhrzeigersinn und der andere Ventilkolben 30 bei einer Drehbewegung im Gegenuhrzeigersinn der Achse 48 betätigt werden. In der jeweils entgegengesetzten Drehrichtung besitzen die Nocken 72, 74 einen Freigang, sodass der zugeordnete Ventilkolben 28 bzw. 30 in seiner Ausgangsstellung verharrt.

An dem den Anschlussleitungen 14, 16 zugewandten Ende der Ventilkolben 28, 30 sind stirnseitig Schließkörper 24, 26 angeordnet, die vorzugsweise als elastische Scheiben ausgebildet und in die Ventilkolben 28, 30 eingelassen sind. Die elastischen Schließkörper 24, 26 sitzen in der Ausgangsstellung auf Ventilsitzen 20, 22 und verschließen die zugeordneten Anschlussleitungen 14, 16, wobei jeweils ein überstehender Mantel 40, 42 das in die Ventilkammer 46 hineinragende Ende der Anschlussleitung 14, 16 umgibt und dem Ventilkolben 28, 30, als Führung dient. Außerdem weisen die Ventilkolben 28, 30 am gegenüberliegenden Ende Zapfen 32, 34 auf, die ebenfalls in gehäusefesten Führungen 36, 38 axial verschiebbar gelagert sind. Eine Ventilfeder 64 in Form einer Blattfeder, die sich über ein Schneidenlager 66 am Ventilgehäuse 18 abstützt, belastet die Ventilkolben 28, 30 in Schließrichtung, sodass bei stromlosen Elektromagneten, wenn sich der Drehanker 44 in einer neutralen Zwischenposition befindet, die Anschlussleitungen 14, 16 gesperrt sind. Im geschlossenen Zustand des Ventilsitzes 10 nimmt der Drehanker 44 eine Ausgangslage jeweils zwischen den paarweise angeordneten Rückschlussblechen 56 und 58 bzw. 60 und 62 ein. Die Blattfeder 64 kann durch andere geeignete Ventilfedern ersetzt werden, z.B. durch zwei Schraubenfedern, die auf Druck beansprucht sind.

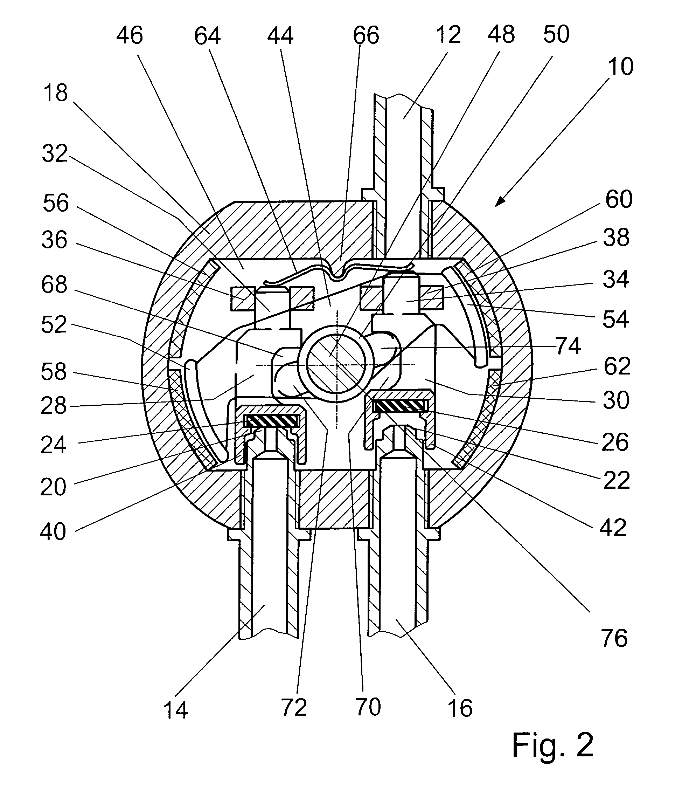

Wird der Elektromagnet angesteuert, bilden sich jeweils an den diametral zueinander liegenden Rückschlussblechen 56 und 62 bzw. 58 und 60 Nord- und Südpole aus. Der Drehanker 44 liegt zwischen je zwei sich gegenüberliegenden Nord- oder Südpolen, wobei sein Nordpol 52 und sein Südpol 54 jeweils von einem gegensinnig gepolten Rückschlussblech 58, 60 angezogen und von einem gleichsinnig gepolten Rückschlussblech 56, 62 abgestoßen werden. Dies führt zu einer Drehbewegung des Drehankers 44 im Gegenuhrzeigersinn (Fig. 2), wodurch gleichzeitig die Nocken 72, 74 verdreht werden. Durch die Nocken 74 wird der Ventilkolben 30 axial verstellt, sodass die Anschlussleitung 16 in dieser Position geöffnet ist, während die Anschlussleitung 14 unter der Kraft der Ventilfeder 64 und auf Grund des Freigangs des Nockens 72 in der Aussparung 68 geschlossen bleibt. Wird der Elektromagnet umgepolt, ergibt sich eine Stellrichtung im Uhrzeigersinn, sodass die Anschlussleitung 14 geöffnet und die Anschlussleitung 16 durch die Ventilfeder 64 über den Ventilkolben 30 und den Schließkörper 26 geschlossen wird.

Das Ventil 10 kann auch als einfaches Abschlussventil ausgebildet sein, bei dem z.B. die Anschlussleitung 14, der Ventilkolben 28 und der Nocken 72 entfallen können. Ferner kann z.B. der Ventilkolben 30 einen Kolbenschieber eines Kolbenschieberventils betätigen. Dabei kann es zweckmäßig sein, dass die Aussparung 70 dem Nocken 74 so angepasst ist, dass er den Ventilkolben 30 in beiden Stellrichtungen verstellt. Außerdem kann der Ventilkolben 30 selbst als Schieberkolben ausgebildet sein, indem ein Teil des Ventilkolbens 30 in bekannter Weise in einem Steuerzylinder angeordnet ist und Steuernuten, Steuerbohrungen oder Steuerkanäle aufweist.

### Bezugszeichen

- 10: Dreiwegeventil
- 12: Anschlussleitung
- 14: Anschlussleitung
- 16: Anschlussleitung
- 18: Ventilgehäuse
- 20: Ventilsitz
- 22: Ventilsitz
- 24: Schließkörper
- 26: Schließkörper
- 28: Ventilkolben
- 30: Ventilkolben
- 32: Zapfen
- 34: Zapfen
- 36: Führung
- 38: Führung
- 40: Mantel
- 42: Mantel
- 44: Drehanker
- 46: Ventilkammer
- 48: Achse
- 50: Nabe
- 52: Nordpol
- 54: Südpol
- 56: Rückschlussblech
- 58: Rückschlussblech
- 60: Rückschlussblech
- 62: Rückschlussblech
- 64: Blattfeder
- 66: Schneidenlager
- 68: Aussparung
- 70: Aussparung
- 72: Nocken
- 74: Nocken
- 76 78 80 82 84 86 88: Drehachse

## Patentansprüche

1. Ventil (10) mit mindestens zwei Anschlussleitungen (12; 14, 16) und mindestens einem Schließkörper (24, 26), der den Durchfluss von der ersten Anschlussleitung (12) zu der weiteren Anschlussleitung (14, 16) oder umgekehrt steuert und der von einem Drehanker (44) mit einem permanenten Nordpol (52) und einem permanenten Südpol (54), die mit einem gehäusefesten, ansteuerbaren Elektromagneten (56, 58, 60, 62) zusammenarbeiten, entgegen der Kraft einer Feder (64) betätigt wird, **dadurch gekennzeichnet, dass** der Schließkörper (24, 26) an einem Ventilkolben (28, 30) vorgesehen ist, der quer zur Drehachse (76) des Drehankers (44) angeordnet, mit diesem triebmäßig verbunden und axial verstellbar ist.

2. Ventil (10) nach Anspruch 1, **dadurch gekennzeichnet, dass** der Schließkörper (24, 26) an einem Ende des Ventilkolbens (28, 30) stirnseitig angeordnet ist und mit einem gehäusefesten, in Verlängerung des Ventilkolbens (28, 30) liegenden Ventilsitz (20, 21) zusammenarbeitet.

3. Ventil (10) nach Anspruch 2, **dadurch gekennzeichnet, dass** der Schließkörper (24, 26) ein elastisches Element umfasst, das in den Ventilkolben (24, 26) eingelassen ist.

4. Ventil (10) nach einem der vorhergehenden Ansprüche, **dadurch gekennzeichnet, dass** mindestens eine der Anschlussleitungen (12, 14, 16) in eine Ventilkammer (46) eines Ventilgehäuses (18) hineinragt und an dem hineinragenden Ende einen Ventilsitz (20, 22) aufweist, der mit dem Schließkörper (24, 26) zusammenwirkt.

5. Ventil (10) nach einem der vorhergehenden Ansprüche, **dadurch gekennzeichnet, dass** der Drehanker (44) mindestens einen quer zur Drehachse (76) verlaufenden Nocken (72, 74) aufweist, der in eine Aussparung (68, 70) des Ventilkolbens (28, 30) eingreift.

6. Ventil (10) nach einem der Ansprüche 2 bis 5, **dadurch gekennzeichnet, dass** der Ventilkolben (28, 30) an dem Ende, das dem Schließkörper (24, 26) abgewandt ist, durch die Feder (64) belastet ist.

7. Ventil (10) nach Anspruch 6, **dadurch gekennzeichnet, dass** der Ventilkolben (28, 30) an dem Ende, das dem Schließkörper (24, 26) abgewandt ist, in einer gehäusefesten Führung (36,38) axial verschiebbar geführt ist.

8. Ventil (10) nach Anspruch 4, **dadurch gekennzeichnet, dass** der Ventilkolben (28, 30) an einem Ende einen Mantel (40, 42) aufweist, der die in die Ventilkammer (46) hineinragende Anschlussleitung (14, 16) umfasst und den Ventilkolben (28, 30) axial verschiebbar relativ zur Anschlussleitung (14, 16) führt.

9. Ventil (10) nach einem der vorhergehenden Ansprüche, **dadurch gekennzeichnet, dass** der Drehanker (44) mehrere axial und/oder radial versetzt angeordnete Nocken (72, 74) aufweist, die zugeordnete Ventilkolben (28, 30) betätigen.

10. Ventil (10) nach Anspruch 9, **dadurch gekennzeichnet, dass** die Feder (64) als zweiarmige Blattfeder ausgebildet ist, die sich über ein mittleres Schneidenlager (66) am Ventilgehäuse (18) abstützt und mit ihren freien Enden zwei zugeordnete ventilkolben (28, 30) belastet.

11. Ventil (10) nach einem der Ansprüche 2 bis 10, **dadurch gekennzeichnet, dass** es ein Dreiwegeventil ist mit drei Anschlussleitungen (12, 14, 16), von denen zwei, nebeneinander angeordnete Anschlussleitungen (14, 16) jeweils einen Ventilsitz (20, 22) aufweisen und die zugeordneten Ventilkolben (28, 30) bei stromlosem Elektromagneten (56, 58, 60, 62) durch die Feder (64) in Schließstellung gehalten werden, während sie je nach Bestromung des Elektromagneten (56, 58, 60, 62) wechselweise eine geöffnete Position einnehmen.
